Europäisches Patentamt

European Patent Office

Office européen des brevets

(19)

(11) Veröffentlichungsnummer: **0 294 335**
**A1**

(12) ## EUROPÄISCHE PATENTANMELDUNG

(21) Anmeldenummer: 88810353.8

(22) Anmeldetag: 01.06.88

(51) Int. Cl.4: **B 62 D 55/247**

(30) Priorität: 02.06.87 CH 2072/87

(43) Veröffentlichungstag der Anmeldung:
07.12.88 Patentblatt 88/49

(84) Benannte Vertragsstaaten:
AT BE DE ES FR GB IT LU NL SE

(71) Anmelder: **Baltensperger, Bruno**
**Eich**
**CH-8311 Brütten (CH)**

**Baltensperger, Beat**
**Eich**
**CH-8311 Brütten (CH)**

(72) Erfinder: **Baltensperger, Bruno**
**Eich**
**CH-8311 Brütten (CH)**

(54) **Aufblasbarer, biegsamer Laufreifen für Fahrzeuge, insbesondere land- und forstwirtschaftliche Fahrzeuge.**

(57) Ein mit einer Luftkammer (4) versehener Reifen wird riemenförmig über zwei auf Achsen (5) gelagerte Trommeln geführt. Der Reifen besteht aus einem Antriebsriemen (1), zwei Seitenwänden (2) und einer Lauffläche (3).

Die größere Auflagefläche auf dem Boden und die dadurch verminderte Kompression des Untergrundes machen den reifen für Anwendungen in der Land- und Forstwirtschaft sowie für Pistenfahrzeuge geeignet.

Fig 1

EP 0 294 335 A1

**Beschreibung**

### LUFTKAMMERRIEMENREIFEN

Die Erfindung betrifft einen aufblasbaren, biegsamen Laufreifen gemäss dem Oberbegriff des Anspruchs 1, insbesondere für land-und forstwirtschaftliche Fahrzeuge, als auch für Arbeitsgeräte, die mittels Raupenketten angetrieben sind. Bis heute wurden verschiedene Reifen hergestellt und entwickelt. So der Vollgummireifen, der die Eisenbereifung ersetzte und dieser wiederum wurde von Luftreifen ersetzt. Der Luftreifen wird auf eine Felge aufgezogen und mit Luft gefüllt und somit bilden diese Teile eine Einheit. Die Erfindung betrifft einen Laufreifen, welcher in der Kennzeichnung des Anspuchs 1 definiert ist.

Der Laufreifen, der keine Felge als Grundlage zur Einheit benötigt, läuft einzig und allein auf Führungstrommeln ab. Der Laufreifen, der selbsttragend ist, hat als Führung einen Antiebsriemen, welcher über die als Riemenscheiben ausgebildeten Trommeln abläuft. Da der Laufreifen nicht auf eine Felge aufgezogen wird wie herkömmliche Reifen, sondern über mehrere Riemenscheiben aubläuft, ist der Laufreifen dehnbar, im Sinne, dass man ihn über mehrere Riemenscheiben ablaufen lässt. Somit ersetzt man die bis heute bekannteb Doppel-Rad und die Extra-Breit-Reifen, welche benötigt werden, um den Bodendruck der Fahrzeuge zu verringern,komplett, indem man den Laufriemen über zwei oder mehrere Riemenscheiben führt. Das heisst, neben der Antriebsriemenscheibe, dem Bedürfnis entsprechend, mechanisch oder hydraulisch angeordnet, plaiert man weitere Riemenscheiben und lässt den Laufreifen über die Riemenscheiben ablaufen, was eine erhebliche Minderung des Bodendruckes ergibt, unabhängig von der Breite des Laufreifens gegenüber dem herkömmlichen Luftreifen.

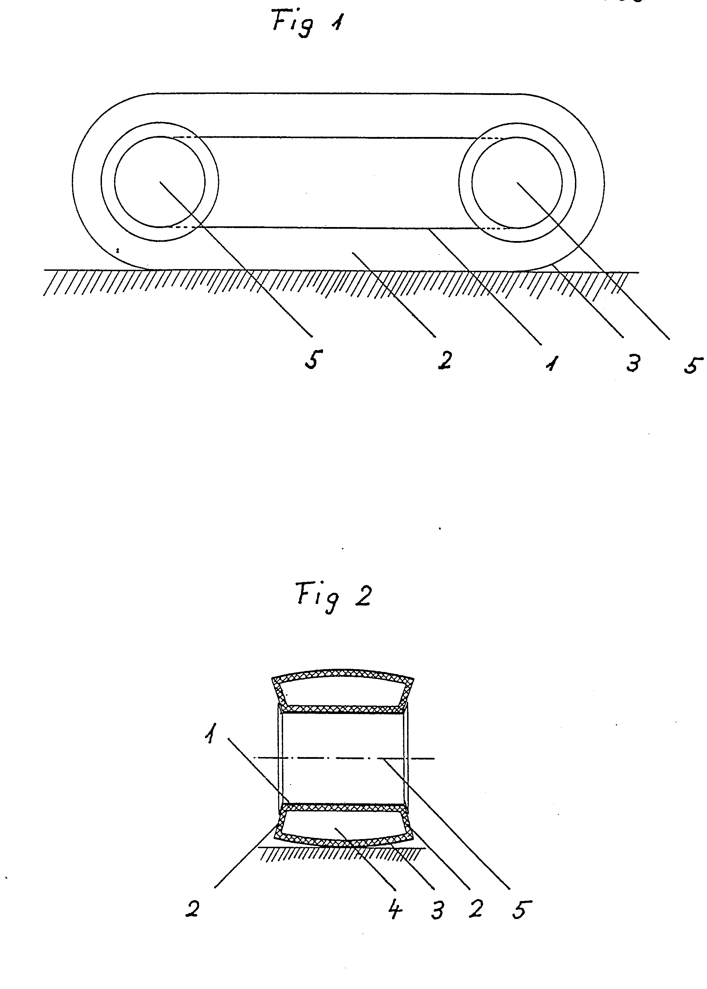

**Patentansprüche**

1. Aufblasbarer, biegsamer Laufreifen für Fahrzeuge, der zum Ablauf auf mindestens zwei von Achsen (5) getragenen Führungstrommeln bestimmt ist, dadurch gekennzeichnet, dass der Laufreifen aus einer selbsttragenden Luftkammer (4) besteht, die aus einem Antriebsriemen (1), zwei Seitenwänden (2) und einer Lauffläche (3) gebildet ist.

0294335

## Fig 1

5    2    1    3    5

## Fig 2

2    4  3  2  5

## EINSCHLÄGIGE DOKUMENTE

EP 88810353.8

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR - A - 2 320 855 (POTAIN POCLAIN)<br>* Gesamt *<br>-- | 1 | B 62 D 55/247 |
| A | FR - A - 791 397 (GRANDSEIGNE)<br>* Fig. 2 *<br>-- | | |
| A | US - A - 4 056 288 (STEDMAN)<br>* Gesamt *<br>---- | | |

RECHERCHIERTE SACHGEBIETE (Int. Cl.4)

B 62 D

Der vorliegende Recherchenbericht wurde für alle Patentansprüche erstellt.

| Recherchenort | Abschlußdatum der Recherche | Prüfer |
|---|---|---|
| WIEN | 24-08-1988 | PANGRATZ |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82